# DEMANDE DE BREVET EUROPEEN

(11) **EP 1 205 529 A1**
(43) Date de publication de la demande: **15.05.2002**
(21) Numéro de dépôt: 00870270.6
(22) Date de dépôt: 13.11.2000
(51) Int. Cl.: C09K 21/14

(54) **Protection antifeu à base de mica appliquée à l'aéronautique**

(71) Demandeur: COMPAGNIE ROYALE ASTURIENNE DES MINES, Société Anonyme, B-1050 Bruxelles (BE)
(72) Inventeur: Mormont, Daniel, 1420 Braine L'Alleud (BE)
(74) Mandataire: Van Malderen, Joelle

(57) **Abrégé**

La présente invention se rapporte à un mat de protection thermique comprenant un film de papier mica contrecollé à une soie de verre imprégnée dans une résine silicone, éventuellement enveloppé dans un feutre de verre HT-polyester.

## Description

### Objet de l'invention

La présente invention se rapporte à un dispositif de protection antifeu à base de mica destiné à être appliqué dans le domaine de l'aéronautique, en particulier destiné à la protection de carlingues d'avions.

### Arrière-plan technologique

Les carlingues d'avions sont actuellement des structures métalliques peu résistantes aux actions du feu, en particulier au risque d'inflammation du kérosène qui, lorsqu'il s'enflamme, peut provoquer des élévations de température supérieures à 1000°.

Les autorités, en particulier la FAA (Federation Aviation Administration) requièrent des nouvelles normes de protection de carlingues d'avions contre les risques d'incendie.

Il est également connu que les produits à base de mica peuvent être utilisés dans des dispositifs d'isolation électrique et thermique.

### Eléments caractéristiques de l'invention

La présente invention est relative à un film à base de mica destiné à être utilisé dans le domaine aéronautique, en particulier un film pouvant être intégré dans des mats d'isolation thermique et acoustique et destiné à être placé contre la face interne des carlingues d'avions et permettant d'assurer une protection de l'intérieur de celle-ci contre le feu, en particulier selon le test "Burnthrough", tel que défini par la FAA (Federation Aviation Administration).

Le film de mica (dénommé ci-dessous 25-24) est une feuille mince constituée d'un papier de mica de l'ordre de 25 g/m² contrecollée à une soie de verre de l'ordre de 24g/m², le tout étant imprégné de résine silicone. Le poids total de ce film est de l'ordre de 60g/m².

La soie de verre a pour but de garantir une tenue à la traction élevée importante lors de la mise en oeuvre et tout au long de la vie du produit.

La résine silicone assure de manière avantageuse une bonne tenue mécanique à haute température.

Le mat d'isolation thermique ainsi obtenu est constitué de deux couches de feutre de verre d'un pouce d'épaisseur chacune, le film mica étant placé d'un seul côté, le tout enveloppé dans une feuille de verre HT-polyester de l'ordre de 25 g/m².

Ce système de protection thermique répond avec succès au test "Burnthrough" avec brûleur à une température de 1141°C avec un flux thermique de 18W/cm².

Ce produit répond également aux performances requises par la FAA, à savoir le maintien pendant 4 minutes sans perforations avec flux arrière maximum de 2,3 W/cm².

Un autre aspect de la présente invention est relatif à une structure d'objet volant, en particulier une carlingue d'avion ou un avion complet comprenant, fixé ou incorporé à ladite carlingue, le mat de protection de l'invention.

## Revendications

1. Mat de protection thermique comprenant un film de papier mica contrecollé à une soie de verre imprégnée dans une résine silicone, éventuellement enveloppé dans un feutre de verre HT-polyester.

2. Mat de protection thermique selon la revendication 1, **caractérisé en ce que** la feuille de papier mica est de l'ordre de 25 g/m² contrecollée à une soie de verre de l'ordre de 24g/m².

3. Mat de protection thermique selon la revendication 2, **caractérisé en ce que** le poids total du film de mica du mat de protection est inférieur ou égal à 60g/m².

4. Mat de protection thermique selon l'une quelconque des revendications précédentes, **caractérisé en ce qu'**il résiste au test dit "Burnthrough" défini par le FAA par une action thermique supérieure à 1100°C avec un flux thermique de l'ordre de 18W/cm².

5. Carlingue d'avion comprenant le mat de protection selon l'une quelconque des revendications précédentes.
